# EUROPÄISCHE PATENTSCHRIFT

(11) **EP 1 199 435 B1**
(45) Veröffentlichungstag und Bekanntmachung des Hinweises auf die Patenterteilung: **18.08.2004**
(21) Anmeldenummer: 01107695.7
(22) Anmeldetag: 28.03.2001
(51) Int. Cl.: E06B 3/667

(54) **Endstopfen zum Anschrauben von Sprossen an Abstandhalterrahmen von inbesondere Isolierglasscheiben**
End plug for screwing the lattice bars to the spacer frame of insulating glazing units in particular
Bouchon d'extrémité pour la fixation par vissage des croisillons au cadre espaceur, en particulier de vitrages isolants

(30) Priorität: 20.10.2000 DE 20018012 U
(43) Veröffentlichungstag der Anmeldung: 24.04.2002
(73) Patentinhaber: R & R Sondermaschinen GmbH, 90579 Langenzenn (DE)
(72) Erfinder: Apfelthaler, Harald, 90579 Langenzenn (DE)
(74) Vertreter: Kern, Wolfgang, Dipl.-Ing.

(56) Entgegenhaltungen:
- EP-A- 0 763 645
- DE-A- 4 404 630
- DE-U- 9 204 763
- DE-U- 9 402 404
- DE-U- 9 418 426

## Beschreibung

Die Erfindung betrifft einen Endstopfen gemäß dem Oberbegriff des Anspruchs 1.

Derartige Endstopfen sind seit einiger Zeit bekannt.

Ferner ist aus dem DE 94 18 426 U ein Sprossenkreuzverbindungselement aus Kunststoff für Isolierverglasungen bekannt, durch das zwischen zwei Glasscheiben angeordnete, einander kreuzende Hohlprofilsprossen, von denen die eine Sprosse durchgehend und die andere zweigeteilt ist, im Kreuzungsbereich miteinander verbindbar sind, bestehend aus einem zweiteiligen Verbindungsstück im Hohlraum der zweiteiligen oder Quersprosse, dessen beide Verbindungsstückteile in die Quersprossenteile einsteckbar und an der Längssprosse befestigbar sind, wobei die beiden Teile des zweigeteilten Verbindungsstücks einen Längsschlitz aufweisen, in den ein Spreizkeil zur Aufweitung und damit zum Festklemmen der beiden Verbindungsstückteile in ihren Hohlräumen einbringbar ist.

Des weiteren weist die DE-A-44 04 630 einen Endstopfen aus Kunststoff zum Anschrauben von Sprossen und Sprossenkreuzen an Abstandhalterrahmen von insbesondere Isolierglasscheiben als bekannt vorausgesetzt, der mit einem in die Stirnseite der Sprosse einsetzbaren Stopfenkörper versehen ist, welcher in dem Profilkörperraum der Hohlprofilsprosse aufspreizbar ist und im Einbauzustand mit wenigstens einem Teil seiner Oberfläche mit der Innenwandoberfläche der Sprosse in Klemmberührung steht, wobei der Stopfenkörper zur Aufspreizung einen Längsschlitz aufweist, der in der mittigen Längsachse des Stopfenkörpers liegt.

Da der Aufspreizvorgang des Stopfenkörpers sowie das Mittel zur Aufspreizung und dessen Rückhalt im Längsschlitz wesentlich für den Halt des Stopfens innerhalb des Profilkörperhohlraums sind, jedoch ein solcher Halt nicht dauerhaft mit den bekannten Mitteln erreichbar war, was in erster Linie darauf zurückzuführen ist, dass derartige Scheiben gewöhnlich erheblichen Temperaturbelastungen ausgesetzt sind, insbesondere dann, wenn sie unter starker Sonneneinstrahlung stehen, h at sich die Erfindung zur Auflage gemacht, hier für eine Verbesserung des bekannten Endstopfens zu sorgen.

Die Lösung dieser Aufgabe besteht deshalb darin, dass der Stopfenkörper einen auf die Stirnseite der Sprosse aufsetzbaren Flansch aufweist, in den eine ihn durchgreifende und in den Längsschlitz eintretende Schraube einschraubbar ist, welcher Längsschlitz den Stopfenkörper vollständig durchzieht und unebene Oberflächen bzw. Schlitzwände hat, die verzahnt sind.

Der Längsschlitz kann unterschiedlich breit sein, also beispielsweise in seinem dem Flansch zugewandten oberen Teil des Stopfenkörpers breiter sein als in seinem dem Stopfenende zugewandten unteren Teil. Die Verwendung von unebenen Oberflächen bzw. Schlitzwänden, beispielsweise einer Verzahnung auf den Schlitzwänden, führt zu einer besseren Aufspreizung und Verankerung der Befestigungsschraube, die durch den Endstopfenflansch axial in den Schlitz eingeschraubt wird, um den Stopfenkörper aufzuweiten und dadurch gegen die Innenwandung der Sprosse bzw. des Sprossenkreuzes zu pressen.

Da beim Hindurchschrauben der Schraube durch den Abstandhalterprofilkörper ein gewisser Materialabfall entsteht, hat es sich als vorteilhaft erwiesen, in dem oberen Ende des Längsschlitzes im Bereich des Endstopfenflansches eine Vertiefung zur Abfallmaterialaufnahme vorzusehen, die zweckmäßigerweise aus zwei hintereinanderliegenden Teilen besteht, nämlich einem Einzugskegel und einem sich daran anschließenden zylindrischen Hohlraum, die beide volumenmäßig so angepasst sind, daß sie den entstehenden Materialabfall aufnehmen können.

Die Erfindung wird nachfolgend anhand des in der Zeichnung dargestellten Ausführungsbeispiels näher erläutert. In der Zeichnung zeigen:
- Fig. 1: eine Vorderansicht des Endstopfens, eingebaut in ein axial aufgeschnittenes Sprossenprofil,
- Fig. 2: eine Seitenansicht des Endstopfens von Fig. 1 und
- Fig. 3: eine Draufsicht des Endstopfens von Fig. 1.

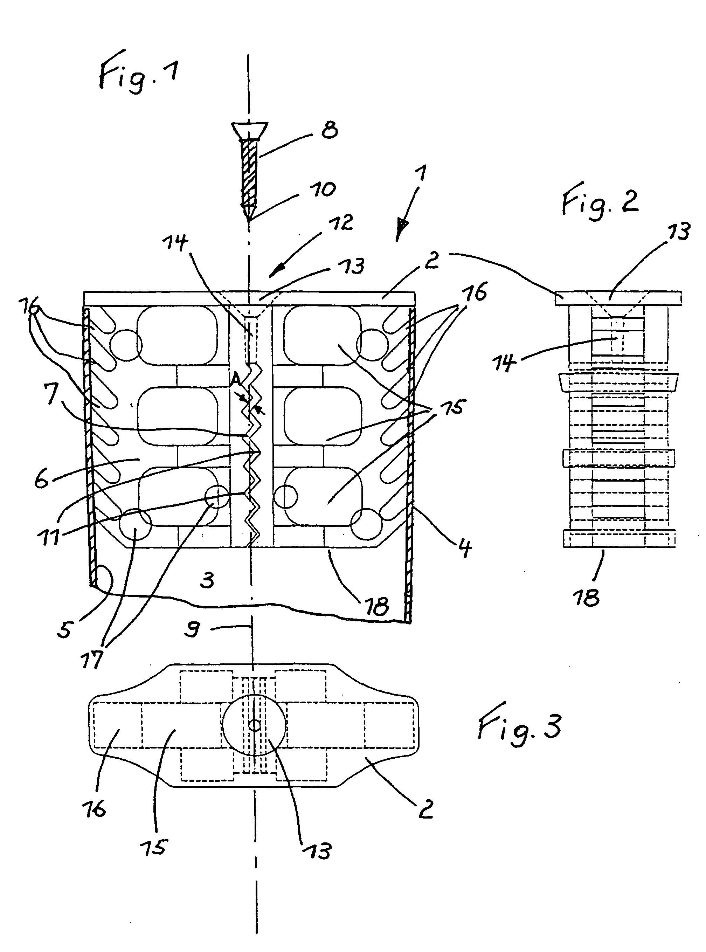

Der in den Figuren 1 - 3 gezeigte Endstopfen 1 aus Kunststoff dient zum Anschrauben von Sprossen und Sprossenkreuzen an Abstandhalterrahmen, die in der Zeichnung nicht dargestellt sind, und zwar insbesondere von Isolierglasscheiben. In Fig. 1 ist das Ende einer Hohlprofilsprosse 4 im Längsschnitt gezeigt, in deren Hohlraum 3 der Stopfenkörper 6 des Endstopfens eingesteckt ist, wobei dieser Stopfenkörper an seinem einen Ende mit einem Flansch 2 versehen ist, der auf der Stirnseite des Sprossenendes aufsitzt und auf diese Weise verhindert, daß der Endstopfen zu weit in den Hohlraum 3 der Sprosse hineinrutscht.

Der Stopfenkörper 6 ist in an sich bekannter Weise im Querschnitt an den Hohlraumprofilquerschnitt der Sprosse 4 angepasst und weist zum Zwecke des Toleranzausgleiches an seinem äußeren Umfang lamellenartige Federelemente 16 auf, die sich an die Innenseite 5 der Hohlproflsprosse 4 anlegen und mit dieser gewissermaßen in reibschlüssige Verbindung treten. Darüber hinaus ist der Stopfen mit Durchbrüchen 15 und 17 versehen, die zur Materialersparnis dienen.

Um den Endstopfen 1 bzw. den Stopfenkörper 4 in der Sprosse fest zu verankern, nachdem er in diese eingesteckt worden ist, ist, wie insbesondere aus Fig. 1 ersichtlich, der Endstopfen 1 aufspreizbar ausgebildet. Zum Aufspreizen dient ein Längsschlitz 7, der in der mittigen Längsachse 9 des Stopfenkörpers 6 ausgebildet ist und in den eine den stirnseitigen Flansch 2 durchgreifende Schraube 8 einschraubbar ist. Durch das Einschrauben wird der Schlitz 7 aufgeweitet, so daß sich die lamellenartigen Federelemente 16 fest gegen die Innenwand 5 der Sprosse legen und damit ein Herausrutschen des Stopfens aus der Sprosse verhindern.

Der Längsschlitz 7 weist unebene Oberflächen bzw. Schlitzwände auf und zwar in Form von in Schlitzlängsrichtung aufeinanderfolgenden Zähnen 11, die so beschaffen sind, daß sich der Abstand der verzahnten, gegenüberliegenden Schlitzwände vom oberen Stopfenende, an dem sich der Flansch 2 befindet, zum unteren Stopfenende 18 hin verkleinert und darüber hinaus die Spitze 10 der Schraube 8 beim Einschrauben gegen die aufeinanderfolgenden Zähne 11 stößt und dadurch den Längsschlitz 7 aufweitet, was bedeutet, daß bei dieser Ausführungsform des Endstopfens keine Sichtverbindung zwischen den beiden Schlitzenden besteht, sondern die Durchsicht durch die Spitzen der Zähne 11 versperrt ist, solange die Schraube 8 nicht eingeschraubt ist.

Das obere Ende des Längsschlitzes 7 weist im Bereich des Flansches 2 eine Vertiefung 12 zur Aufnahme von Materialspänen auf, die dadurch entstehen, daß die Schraube 8, bevor sie in den Flansch 2 eintritt und damit den Endstopfen 1 an dem Abstandhalterrahmen befestigt, durch letzteren, der gewöhnlich aus Metall besteht, von außen hindurchtreten muß und dabei aufgrund der Schraubbewegung metallene Späne und Splitter aus der Bohrung zum Endstopfen befördert. Die Vertiefung 12 wird von einem Einzugskegel 13 mit angeschlossenem zylindrischen Hohlraum 14 gebildet, deren Volumina an die zu erwartende Materialabfallmenge angepasst sind, wodurch verhindert wird, daß die Materialspäne und -splitter sich zwischen der Oberfläche des Flansches 2 und der Innenseite des Abstandhalterrahmens ablagern und dadurch eine schlüssige Verbindung zwischen Flanschoberfläche und Rahmenoberfläche verhindern.

Der im obigen mit A bezeichnete Abstand der verzahnten, sich gegenüberliegenden Wände des Längsschlitzes 7 ist bei einer bewährten Ausführungsform so gewählt, daß dieser im Bereich des oberen Schlitzendes etwa 2 mm und im Bereich des unteren Schlitzendes 0,5 mm beträgt, und zwar nicht im Einbauzustand des Endstopfens, insbesondere bevor die Schraube 8 in den Endstopfen eingeschraubt wird, um diesen aufzuweiten.

## Patentansprüche

1. Endstopfen aus Kunststoff zum Anschrauben von Sprossen und Sprossenkreuzen an Abstandhalterrahmen von insbesondere Isolierglasscheiben, mit einem in die Stirnseite der Sprosse einsteckbaren Stopfenkörper, der in dem Profilkörperhohlraum der Hohlprofilsprosse aufspreizbar ist und im Einbauzustand mit wenigstens einem Teil seiner Oberfläche mit der Innenwandoberfläche der Sprosse in Klemmberührung steht, wobei der Stopfenkörper (6) zur Aufspreizung einen Längsschlitz (7) aufweist, der in der mittigen Längsachse (9) des Stopfenkörpers (6) liegt, **dadurch gekennzeichnet, dass** der Stopfenkörper (6) einen auf die Stirnseite der Sprosse aufsetzbaren Flansch (2) aufweist, in den eine ihn durchgreifende und in den Längsschlitz (7) eintretende Schraube (8) einschraubbar ist, welcher Längsschlitz (7) den Stopfenkörper vollständig durchzieht und unebene Oberflächen bzw. Schlitzwände hat, die verzahnt sind.

2. Endstopfen nach Anspruch 1, **dadurch gekennzeichnet, dass** der Längsschlitz (7) zwischen den beiden Stopfenenden unterschiedlich breit ist.

3. Endstopfen nach Anspruch 2, **dadurch gekennzeichnet, dass** der Längsschlitz (7) in seinem dem Flansch (2) zugewandten oberen Teil des Stopfenkörpers (6) breiter ist als in seinem dem Stopfenende (18) zugewandten unteren Teil.

4. Endstopfen nach Anspruch 3, **dadurch gekennzeichnet, dass** der Längsschlitz (7) in seinem oberen Bereich eine größere Breite (Abstand A) hat als im Bereich des unteren Stopfenendes (18).

5. Endstopfen nach Anspruch 4, **dadurch gekennzeichnet, dass** der Abstand A der verzahnten gegenüberliegenden Längsschlitzwände sich vom oberen, den Flansch (2) aufweisenden Stopfenende zum unteren Stopfenende (18) verkleinert.

6. Endstopfen nach einem der Ansprüche 1 bis 5, **dadurch gekennzeichnet, dass** die Größe der Verzahnung so gewählt ist, dass die beim Anschrauben des Stopfens an den Abstandhalterrahmen durch den Längsschlitz (7) hindurchtretende Schraube (8) mit ihrer Spitze (10) gegen die aufeinanderfolgenden Zähne (11) stößt und dabei den Längsschlitz aufweitet.

7. Endstopfen nach einem der Ansprüche 1 bis 6, **dadurch gekennzeichnet, dass** das obere Ende des Längsschlitzes (7) im Bereich des Endstopfenflansches (2) eine Vertiefung (12) zur Abfallmaterialaufnahme aufweist.

8. Endstopfen nach Anspruch 7, **dadurch gekennzeichnet, dass** die Vertiefung (12) von einem Einzugskegel (13) mit angeschlossenem zylindrischen Hohlraum (14) gebildet ist, deren Volumina dem Abfallvolumen angepasst sind.

## Claims

1. End plug for screwing the lattice bars and lattice bar crosses to an spacer frame of insulating glass units in particular comprising a block element insertable into the front face of the lattice bar, which block element can be expanded within the hollow space of the profile body of the hollow profile lattice bar and contacts tightly in mounted condition by at least part of its surface the inner wall surface of the lattice bar, the construction being such that the block body (6) is provided for the expansion with a longitudinal slot (7) located in the central longitudinal axis (9) of the block body (6), **characterized in that** the block body (6) is provided with a flange (2) which can be positioned on the front face of the lattice bar and in which a screw (8) can be screwed passing through the flange and entering into the longitudinal slot (7), which longitudinal slot (7) extends completely through the block body and is provided with uneven surfaces or, respectively, slot walls engaging one another by teeth.

2. End plug according to claim 1, **characterized in that** the longitudinal slot (7) has a width which differs between the two ends of the plugs.

3. End plug according to claim 2, **characterized in that** the longitudinal slot (7) is broader in the upper part of the block body (6) adjacent to its flange (2) than within its lower part adjacent to the end (18) of the block.

4. End plug according to claim 3, **characterized in that** the longitudinal slot (7) is provided in its upper area with a greater width (distance A) than the area of the lower end (18) of the plug.

5. End plug according to claim 4, **characterized in that** the distance A of the opposing walls of the longitudinal slot which are provided with engaging teeth is diminuishing from the upper end of the plug provided with the flange (2) to the lower end (18) of the plug.

6. End plug according to one of the claims 1 to 5, **characterized in that** the interconnection by teeth is such that on screwing the block to the spacer frame the screw (8) extending to the longitudinal slot (7) touches with its tip (10) the teeth (11) succeeding one another causing by that the expansion of the longitudinal slot.

7. End plug according to one of the claims 1 to 6, **characterized in that** the upper end of the longitudinal slot (7) is provided in the area of the flange (2) of the end plug with a depression (12) for receiving waste material.

8. End plug according to claim 7, **characterized in that** the depression (12) is provided by a cone (13) followed by a cylindrical hollow space (14) the volume of which is adapted to the volume of the waste material.

## Revendications

1. Bouchon d'embout en matière plastique pour la fixation par vis de montants et de croisillons dans des cadres intercalaires notamment dans des vitrages isolants, comprenant un corps de bouchon pouvant être emmanché dans la face frontale du montant, pouvant être écarté à l'intérieur du profilé creux du montant et étant, à l'état monté, en contact de serrage avec la surface de la paroi intérieure du montant, par au moins une partie de sa propre surface, le corps de bouchon (6) comportant une fente longitudinale (7) permettant son écartement, la fente se situant dans l'axe longitudinal central (9) du corps de bouchon (6), **caractérisé en ce que** le corps de bouchon (6) comporte une collerette (2) pouvant venir en appui sur la face frontale du montant et dans laquelle peut être vissée une vis (8) traversant la collerette et pénétrant dans la fente longitudinale (7), ladite fente longitudinale (7) traversant entièrement le corps du bouchon et présentant des surfaces ou parois irrégulières de la fente, qui engrènent l'une dans l'autre.

2. Bouchon d'embout selon la revendication 1, **caractérisé en ce que** la fente longitudinale (7) présente une largeur différente d'une extrémité du bouchon à l'autre.

3. Bouchon d'embout selon la revendication 2, **caractérisé en ce que** la fente longitudinale (7) est plus large dans la partie supérieure du corps de bouchon (6), tournée vers la collerette (2), que dans sa partie inférieure tournée vers l'extrémité (18) du bouchon.

4. Bouchon d'embout selon la revendication 3, **caractérisé en ce que** la fente longitudinale (7) présente, dans sa partie supérieure, une largeur plus grande (distance A) que dans la partie de l'extrémité inférieure (18) du bouchon.

5. Bouchon d'embout selon la revendication 4, **caractérisé en ce que** la distance A des parois dentées mutuellement opposées de la fente longitudinale diminue, de l'extrémité supérieure du bouchon, qui comporte la collerette (2), vers l'extrémité inférieure (18) du bouchon.

6. Bouchon d'embout selon l'une des revendications 1 à 5, **caractérisé en ce que** la taille de la denture est choisie de manière telle que la vis (8) qui, lors du vissage du bouchon sur le cadre intercalaire, traverse la fente longitudinale (7), bute par sa pointe (10) sur les dents successives (11) et élargit ainsi la fente longitudinale.

7. Bouchon d'embout selon l'une des revendications 1 à 6, **caractérisé en ce que** la partie supérieure de la fente longitudinale (7) comporte, au niveau de la collerette (2) du bouchon d'embout, un renfoncement (12) destiné à recevoir les déchets de matière.

8. Bouchon d'embout selon la revendication 7, **caractérisé en ce que** le renfoncement (12) est constitué par un cône rentrant (13) qui rejoint une cavité cylindrique (14), dont les volumes sont adaptés au volume de déchets de matière.
